## Europäisches Patentamt

## European Patent Office

## Office européen des brevets

(11) Veröffentlichungsnummer : **0 059 458**
**B1**

(12) **EUROPÄISCHE PATENTSCHRIFT**

(45) Veröffentlichungstag der Patentschrift :
17.07.85

(21) Anmeldenummer : **82101504.7**

(22) Anmeldetag : **26.02.82**

(51) Int. Cl.⁴ : **E 06 B  3/26**

(54) **Verbindungsanordnung.**

(30) Priorität : **27.02.81 DE 3107398**
**05.01.82 DE 3200078**

(43) Veröffentlichungstag der Anmeldung :
**08.09.82 Patentblatt 82/36**

(45) Bekanntmachung des Hinweises auf die Patenterteilung : **17.07.85 Patentblatt 85/29**

(84) Benannte Vertragsstaaten :
**AT BE CH DE FR GB IT LI LU NL SE**

(56) Entgegenhaltungen :
**DE-B- 2 729 909**
**FR-A- 2 363 720**
**US-A- 3 363 383**
**US-A- 4 115 972**

(73) Patentinhaber : **TEFO AG**
**Neugasse 10**
**CH-6300 Zug (CH)**

(72) Erfinder : **Steinmetz, Georg**
**Salinenstrasse 27**
**D-6550 Bad Kreuznach (DE)**

(74) Vertreter : **Schickedanz, Willi**
**Langener Strasse 70**
**D-6050 Offenbach/Main (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 059 458 B1

**Beschreibung**

Die Erfindung betrifft eine Verbindungsanordnung gemäß dem Oberbegriff des Patentanspruchs 1.

Auf zahlreichen Gebieten der Technik ist es erforderlich, zwei gleichartige Teile mit Hilfe eines dritten Teils miteinander zu verbinden. Von besonderer Bedeutung sind dabei diejenigen Fälle, bei denen der verbindende dritte Teil eine Dämpfungswirkung ausüben soll, sei es, daß Schall oder Kälte zu dämpfen sind, sei es, daß eine elektrische Isolation bewirkt werden soll. Die Wärme- und Schalldämpfung oder -dämmung spielt hauptsächlich bei Türen und Fenstern eine große Rolle, wo es darauf ankommt, ungewünschte äußere Einflüsse von der Wohnung fernzuhalten.

Es ist bereits ein zusammengesetztes, wärmeisolierendes Bauelement bekannt, das zwei Isolierleisten mit U-förmigem Grundkörper aufweist, deren Stege in glatte Nuten von Aluminium-Profilen eingeschoben werden (DE-A-2 745 846). Nachteilig ist hierbei, daß die Grundkörper nicht mittels eines wärmedämmenden Elements verbunden werden können.

Bei einem anderen bekannten wärmeisolierenden Rahmenschenkel für Fenster, Türen oder dergleichen weisen die zu verbindenden Metallprofile Nuten auf, in die Raststege von Kunststoff-Verbindungsleisten eingreifen (DE-A-2 741 905). Nachteilig ist hierbei jedoch, daß für die Festlegung der Verbindungsleisten in den Nuten der Metallprofile Stegfortsätze erforderlich sind, die aufgedrückt und angeformt werden müssen.

Es ist weiterhin ein wärmegedämmtes Metallprofil für Fenster bekannt, das U-förmige Nuten aufweist, in die ein Schenkel eines im wesentlichen U-förmigen Kunststoffprofils eingreift (DE-A-2 637 782).

Schließlich ist auch noch eine Kunststoffleiste zur Verbindung von Aluminiumprofilen zu Rahmenschenkeln von Fenstern und Türen bekannt, wobei Rastnasen vorgesehen sind, welche hinterschnittene Stege der Aluminiumprofile umgreifen (DE-U-7 721 588).

Der Erfindung liegt die Aufgabe zugrunde, ein Verbindungselement aus schlecht wärmeleitendem Material zu schaffen, welches für die Verbindung von gut wärmeleitenden Teilen dient und das einen besseren Sitz auf den entsprechenden Anlageteilen der gut wärmeleitenden Teile ermöglicht.

Diese Aufgabe wird gemäß den Merkmalen des Patentanspruchs 1 gelöst.

Ausführungsbeispiele der Erfindung sind in der Zeichnung dargestellt und werden im folgenden näher beschrieben.

Es zeigen:

Figur 1 eine Vorrichtung mit zwei Metallprofilen und zwei nahe beieinander liegenden Kunststoff-Verbindungselementen;

Figur 2 eine weitere Ausführungsform eines Kunststoff-Verbindungselements;

Figur 3 eine Variante der Ausführungsform gemäß Fig. 2.

Figur 4 ein Kunststoff-Schnappverbindungs-Element;

Figur 5 ein Verbindungselement mit eingehängtem Koppelelement;

Figur 6 zwei Kunststoff Verbindungselemente gemäß Fig. 4, die über ein Kunststoff-Koppelelement miteinander verbunden sind;

Figur 7 zwei verkoppelte gut wärmeleitende Teile;

Figuren 7a-7c drei Riffelungs-Varianten.

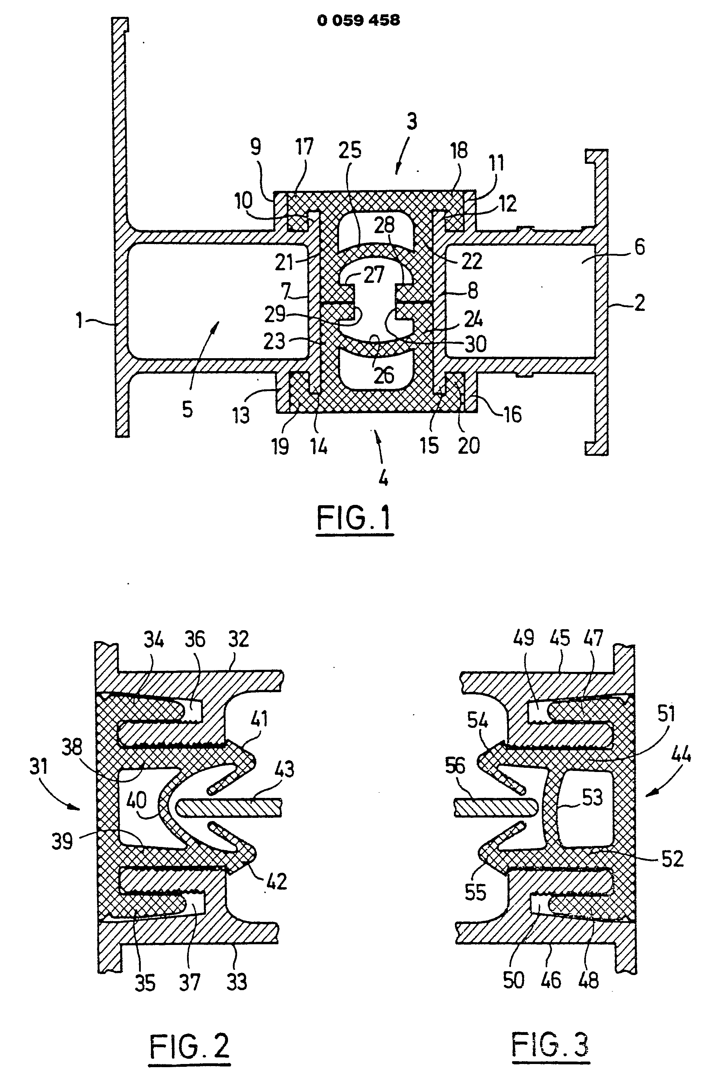

In der Fig. 1 sind zwei Metallprofile 1, 2 dargestellt, die über zwei Kunststoff-Verbindungselemente 3, 4 miteinander verbunden sind. Aufgabe dieser Kunststoff-Verbindungselemente 3, 4 ist es, den Wärme- oder Kälteübergang von dem einen Metallprofil 1 zu dem anderen Metallprofil 2 bzw. umgekehrt zu verhindern oder wenigstens stark zu reduzieren. Jedes der beiden Metallprofile 1, 2 weist ein viereckiges Hohlrohr 5, 6 auf, dessen eine Seitenfläche 7, 8 als Auflage für die Kunststoff-Verbindungselemente 3, 4 dient. Jedes Metallprofil 1, 2 besitzt ferner zwei obere Vorsprünge 9, 10, 11, 12 sowie zwei untere Vorsprünge 13, 14, 15, 16. Zwischen die beiden oberen und die beiden unteren Vorsprünge 9-16 greifen jeweils Raststege 17, 18, 19, 20 der Kunststoff-Verbindungselemente 3, 4 ein, so daß diese Verbindungselemente 3, 4 auf diese Weise mit den Metallprofilen 1, 2 verbunden werden.

Die Kunststoff-Verbindungselemente 3, 4 weisen auch jeweils zwei innere Schenkel 21, 22, 23, 24 auf, die mittels einer gekrümmten Brücke 25, 26 miteinander gekoppelt sind. An den jeweiligen Enden dieser Schenkel 21, 22, 23, 24 sind gegeneinander gerichtete Klauen 27, 28, 29, 30 vorgesehen, die bei der in der Fig. 1 dargestellten Vorrichtung die Funktion haben, eine Auflage für die jeweils gegenüberliegenden Klauen zu bilden. Wie weiter unten noch erläutert wird, können sie jedoch auch ein Koppelelement aufnehmen, das immer dann verwendet wird, wenn die beiden Kunststoff-Verbindungselemente relativ weit auseinander liegen. Das Koppelelement, welches ebenfalls aus Kunststoff besteht, dient in einem solchen Fall als weitere Kälte- oder Wärmesperre.

Die Auflageflächen der Metallprofile 1, 2, auf denen die inneren Schenkel der Kunststoff-Verbindungselemente 3, 4 aufliegen, sind zweckmäßigerweise etwas abgeschrägt, damit die Verbindungselemente 3, 4 bei der Herstellung der Verbindung zwischen den Metallprofilen zusammengedrückt werden. Die Brücken 25, 26 entfalten hierbei ihre Federwirkung, indem sie die Schenkel 21, 22 bzw. 23, 24 fest gegen Seitenflächen 7, 8 drücken. Dies wiederum bewirkt, daß die Metallprofile 1, 2 sehr fest zusammengehalten werden.

In der Fig. 2 ist ein Kunststoff-Verbindungselement 31 dargestellt, das zwei Metallprofile 32, 33 zusammenhält. Dieses Verbindungselement 31 besitzt zwei Raststege 34, 35, die in Aussparungen 36, 37 der Metallprofile 32, 33 eingreifen. Es weist ferner zwei Schenkel 38, 39 auf, die mittels einer stark gekrümmten Brücke 40 miteinander verbunden sind. Am Ende der Schenkel 38, 39 sind Klauen vorgesehen, die zwischen sich ein Koppelelement 43 einschließen, das zu einem nicht dargestellten Verbindungselement führt. Das Kunststoff-Verbindungselement 31 wird durch Einschieben von links nach rechts mit den Metallprofilen 32, 33 verbunden. Hierbei greifen die Raststege 34, 35 in die Aussparungen 36, 37 und werden durch die aufgerauhten oder mit Zacken versehenen Innenwände der Aussparungen 36, 37 festgehalten. Die Raststege 34, 35 können auch selbst mit Zacken auf ihren Außenflächen versehen sein, so daß sie besser in den Aussparungen 36, 37 haften. Die inneren Schenkel 38, 39 werden durch leicht abgeschrägte Flächen der Metallprofile 32, 33 geführt, wobei die Schräge bewirkt, daß die Schenkel 38, 39 gegen die Federkraft der Brücke 40 zusammengedrückt werden und hierdurch einen besseren Sitz erhalten. Wenn das Klunststoff-Verbindungselement vollständig hineingeschoben wurde, rasten die Schultern der Klauen 41, 42 auf den entsprechenden Vorsprüngen der Metallprofile 32, 33 ein. Aufgrund des Zusammendrückens der inneren Schenkel 38, 39 und damit auch der Klauen 41, 42 wird das Koppelement 43 von den Klauen 41, 42 gehalten.

Die Fig. 3 zeigt ein Kunststoff-Verbindungselement 44, das — ähnlich wie das Kunststoff-Verbindungselement der Fig. 2 — mit zwei Metallprofilen 45, 46 verbunden werden kann. Es weist zwei Raststege 47, 48 auf, die in Aussparungen 49, 50 der Metallprofile 45, 46 eingreifen. Ferner sind zwei Schenkel 51, 52 vorgesehen, die mittels einer Brücke 53 miteinander gekoppelt sind. Diese Brücke 53 ist jedoch im Gegensatz zur Brücke 40 der Fig. 2 weniger stark gekrümmt. Die Klauen 54, 56 drücken auf ein Koppelelement 56, das zu einem nicht dargestellten weiteren Verbindungselement führt.

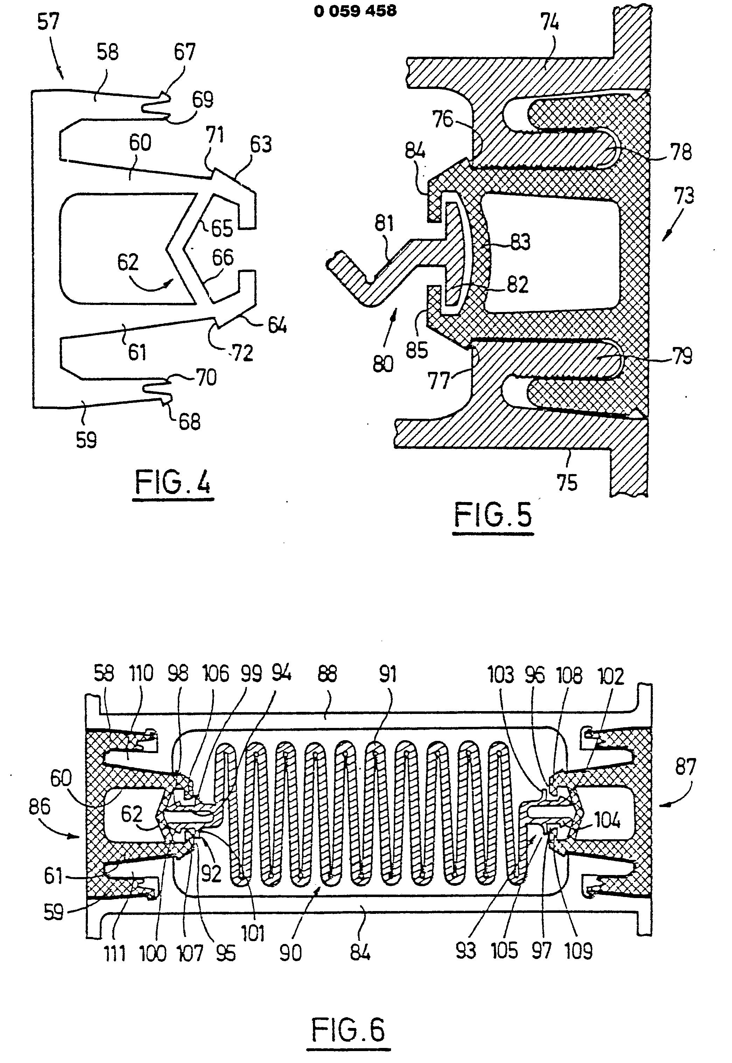

In der Fig. 4 ist ein weiteres Kunststoff-Verbindungselement 57 dargestellt, das zwei Raststege 58, 59 und zwei Schenkel 60, 61 aufweist, wobei die Schenkel 60, 61 über eine Brücke 62 miteinander gekoppelt sind und an ihren Enden Klauen 63, 64 aufweisen. Die Brücke 62 besteht dabei aus zwei geraden Stücken 65, 66, die einen bestimmten Winkel zueinander bilden.

Die Raststege 58, 59 weisen an ihren jeweiligen Enden ein hakenförmiges Gebilde 67, 68 auf, dem ein relativ kleines Bein 69, 70 gegenüber liegt.

An der Übergangsstelle zwischen den Schenkeln 60, 61 und den Klauen 63, 64 befinden sich Schultern 71, 72, die sich auf Metallprofilteilen abstützen können.

Die Fig. 5 zeigt ein weiteres Kunststoff-Verbindungselement 73, das zwei Metallprofilteile 74, 75 zusammenhält. Dieses Kunststoff-Verbindungselement entspricht weitgehend dem Kunststoff-Verbindungselement 3, 4 der Fig. 1. Es weist jedoch zusätzlich noch zwei Auflageschultern 76, 77 auf, die sich auf jeweils einem Vorsprung 78, 79 der Metallprofilteile 74, 75 abstützen. Außerdem ist ein Koppelelement 80 vorgesehen, das einen zieharmonikaartig gefalteten Teil 81 und eine Kappe 82 aufweist. Die Kappe 82 ist hierbei an die Raumform angepaßt, die sich durch die Brücke 83 und die Klauen 84, 85 ergibt.

Die Fig. 6 zeigt zwei erfindungsgemäße Kunststoff-Verbindungselemente 86, 87, die relativ weit voneinander entfernt sind und zwei Metallprofilteile 88, 89 zusammenhalten. Die beiden Kunststoff-Verbindungselement 86, 87 entsprechen hinsichtlich ihres Aufbaus dem in der Fig. 4 dargestellten Kunststoff-Verbindungselement 57. Sie sind jedoch nunmehr mit den Metallprofilen 88, 89 verbunden und weisen ein Koppelelement 90 auf, das einen zieharmonikaartig gefalteten Teil 91 und zwei Kappen 92, 93 enthält. Die beiden Kappen 92, 93 bestehen im wesentlichen aus zwei Schenkeln 94, 95, 96, 97, von denen jeweils zwei Schenkel ein U bilden, dessen Außenseiten mit Vorsprüngen 98, 99, 100, 101 bzw. 102, 103, 104, 105 versehen ist. In die Lücke zwischen den Vorsprüngen 98, 99 bzw. 100, 101 bzw. 102, 103 bzw. 104, 105 greifen die Klauen 106 bzw. 107 oder 108 bzw. 109 ein.

Die Metallprofile 1, 2 bzw. 32, 33 bzw. 45, 46 bzw. 74, 75 bzw. 88, 89 sind so ausgebildet, daß die Schenkel der Kunststoff-Verbindungselemente beim Verbinden der Metallprofile zusammengedrückt werden. Dies wird dadurch erreicht, daß die den Schenkeln 21, 22, 38, 39, 51, 52 zugewandten Seiten der Vorsprünge abgeschrägt sind, d. h. die Schenkel der Kunststoff-Verbindungselemente werden beim Einfügen der Raststege 17, 18, 19, 20, 34, 35, 47, 48, 58, 59 in die entsprechenden Aussparungen zusammengedrückt. Hierbei dient die Brücke 25, 40, 53, 62, 83 als Feder, die versucht, die Schenkel auseinander zu drücken. Die Koppelelemente 43, 56, 81, 90 können mit ihren Enden zwischen den Klauen 27, 28, 29, 30, 41, 42, 54, 55, 63, 64, 84, 85 angeordnet sein. Werden nun diese Klauen mit den zugehörigen Schenkeln zusammengepreßt, so werden diese Enden durch die Klauen festgehalten. Die Klauen umgreifen also die Enden der Koppelemente unso mehr, je weiter die Kunststoff-Verbindungselemente mit ihren äußeren Schenkeln in die Nuten der Metallprofile hineingeschoben werden.

Mit dem erfindungsgemäßen Verbindungselemente sind zahlreiche vorteilhafte Eigenschaften verbunden. Einer dieser Vorteile besteht darin, daß nur ein Verbindungselementen-Typ vorgesehen ist, um zwei Metallprofile miteinander zu verbinden. Es müssen also nicht — wie bei einigen bekannten Verbindungselementen — zwei verschiedene Elemente vorgesehen sein, die etwa wie Nut und Feder ineinandergreifen. Ein weiterer Vorteil ist, der, daß das erfindungsgemäße Verbindungselement sowohl mit als auch ohne Koppelelement verwendet werden kann. Die Fig. 1 zeigt ein Beispiel, bei dem kein Koppelement verwendet ist, während die Fig. 6 ein Beispiel zeigt, bei dem ein solches Koppelelement Anwendung findet. Die Koppelelemente sind immer dann von Vorteil, wenn keine festen oder sehr große Abstände zwischen den einzelnen Verbindungselementen erforderlich werden. Die Verbindungselemente können dann in beliebigen Abständen vorgesehen sein, wobei diese Abstände durch die Koppelelemente überbrückt sind. Da die Koppelelemente aus einem schlecht wärmeleitenden Material bestehen, verhindern oder vermindern sie den Wärmeübergang vom einem Metallprofil zum andern. Eine besonders vorteilhafte Ausgestaltung des mittleren Teils eines Koppelelements könnte darin bestehen, daß er hohl ist. Zweckmäßigerweise ist das Koppelelement nicht nur aus einem schlecht wärmeleitenden, sondern auch aus einem elastischen Material aufgebaut. Dadurch kann dasselbe Koppelement für verschiedene Abstände zwischen den Verbindungselementen verwendet werden, weil es sich wie ein Leporello oder eine Ziehharmonika zusammendrücken oder auseinanderziehen läßt.

Für das Merkmal, daß eine Brücke zwischen den inneren Schenkeln vorgesehen ist, wird Elementenschutz beansprucht, denn die Federwirkung dieser Brücke ermöglicht ein präzises und festes Einrasten des Verbindungselements. Desgleichen wird für das Merkmal, daß die inneren Schenkel an ihren jeweiligen Enden gegeneinander gerichtete Klauen aufweisen, Elementenschutz beansprucht, weil hierdurch das Einfügen eines Koppelements ermöglicht wird.

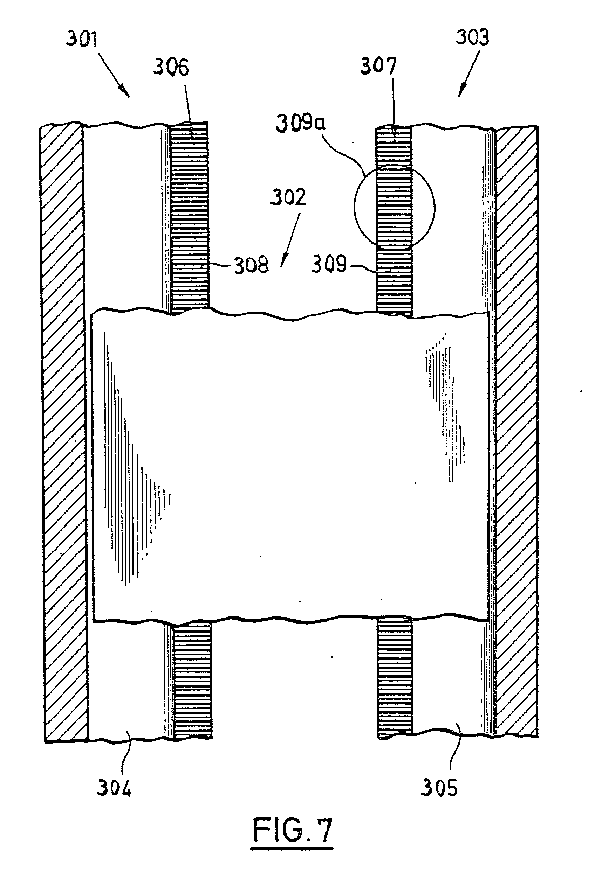

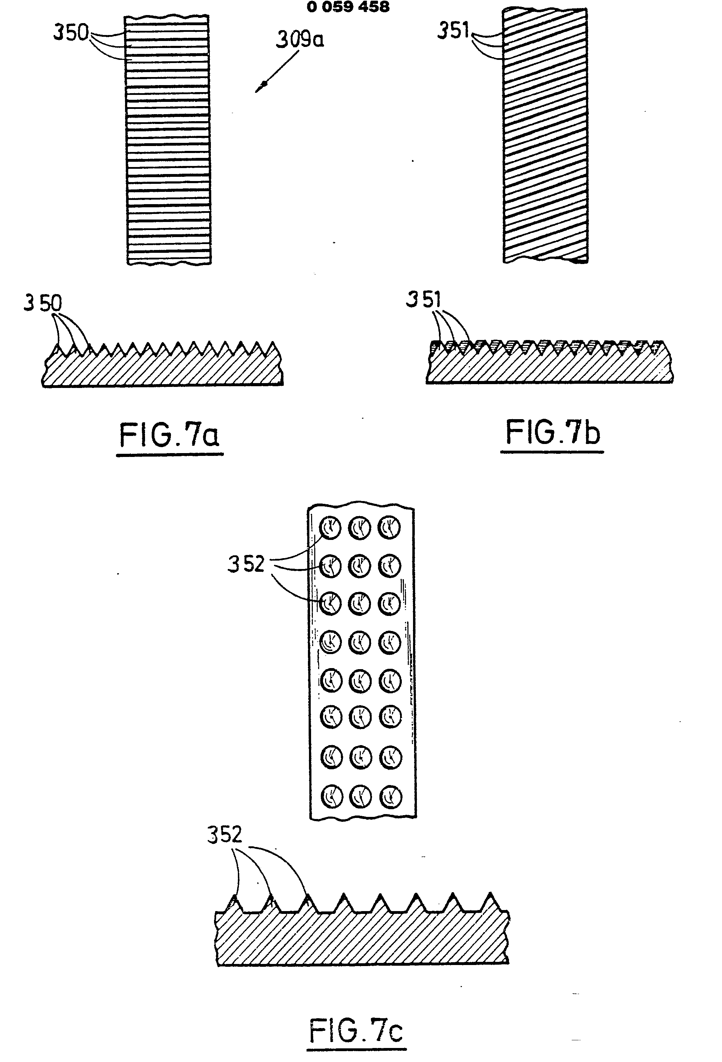

In der Fig. 7 ist im Prinzip dargestellt, wie ein erster Teil 301 über ein Verbindungselement 302 mit einem zweiten Teil 303 verbunden ist. Der erste und der zweite Teil 301, 303 sowie das Verbindungselement 302 sind hierbei nur teilweise dargestellt. Das Verbindungselement 302 ist im Vergleich zu den Teilen 301, 303 noch weiter verkürzt dargestellt, damit die erfindungswesentlichen Teile besser sichtbar sind. In der Praxis sind die Teile 301, 303 und das Verbindungselement 302 im allgemeinen gleich groß, wobei der erste Teil 301 z. B. den nach außen gerichteten Teil eines Tür- oder Fensterrahmens bedeutet, während der zweite Teil 303 der nach innen gerichtete Teil ist.

Beide Teile 301, 302 weisen Stege 304, 305 auf, die an ihren Enden mit von oben nach unten verlaufenden geriffelten Flächen 306, 307 versehen sind. Die Riffelungen bestehen aus sägezahnartigen Erhebungen 308, die in horizontaler Richtung verlaufen. Das Verbindungselement 302, das die Teile 301 und 303 gegen horizontale Verschiebungen sichert, weil es in Vorsprünge der Stege 304, 305 eingreift, die in der Fig. 7 nicht sichtbar sind, würde ohne die Flächen 306, 307 mit den Erhebungen 308, 309 keine hinreichende Sicherheit bezüglich vertikaler Verschiebungen bieten. Wenn z. B. der Teil 301 festgehalten wird und auf den Teil 302 Kräfte einwirken, die diesen nach oben oder unten verschieben wollen, so kann diese Verschiebung stattfinden, weil die Klemmwirkung des Verbindungselements 302 im allgemeinen nicht ausreicht, um eine derartige Verschiebung zu verhindern. Um eine solche Verschiebung zu vermeiden, sind die Erhebungen 308, 309 vorgesehen, die mit Hilfe eines Rändelrads oder dergleichen auf die aus Aluminium bestehenden Stege 304, 305 eingepreßt werden können. Bei der Montage der beiden Teile 301, 302 mittels des vorzugsweise aus Kunststoff bestehenden Verbindungselements 302 werden die Erhebungen 308, 309 fest gegen die entsprechenden Flächen des Verbindungselements 302 gedrückt, so daß sie sich in dieses Verbindungselement 302 eindrücken. Eine vertikale Verschiebung der Teile 301, 303 wird hierdurch ausgeschlossen.

In der Fig. 7a sind die in der Fig. 7 mit 309a bezeichneten Erhebungen 309 noch einmal im Detail dargestellt. Man erkennt in der oberen Darstellung der Fig. 7a, daß mehrere querverlaufende Erhebungen 350 vorgesehen sind, während in der unteren Darstellung das Profil der Erhebungen 350 zu erkennen ist. Dieses Profil entspricht einem gleichschenkligen Dreieck.

Die Fig. 7b zeigt eine Variante der Vorrichtung der Fig. 7a, wobei die Erhebungen jedoch schräg verlaufen. Die Erhebungen auf dem Teil 301 sind spiegelbildlich zu den Erhebungen auf dem Teil 302, wobei die spiegelnde Ebene zwischen den beiden Teilen angeordnet ist.

Eine weitere Variante ist in der Fig. 7c gezeigt. Hierbei sind die Erhebungen Kegel 352, die sich auf der Fläche 306 bzw. 307 erheben. Die obere Darstellung der Fig. 7c zeigt die Draufsicht auf die Spitzen der Kegel 352, während die untere Darstellung das Profil dieser Kegel 352 zeigt.

## Patentansprüche

1. Verbindungsanordnung bei den gut wärmeleitende Teile (1, 2, 32, 33, 45, 46, 74, 75, 88, 84, 301, 303) durch je zwei Verbindungselemente (3, 4, 31, 44, 57, 73, 86, 87, 302) aus schlecht wärmeleitendem Material miteinander verbunden sind, die jeweils zwei äußere und zwei innere Schenkel (17, 18, 19, 20, 34, 35, 47, 48, 58, 59 bzw. 21, 22, 23, 24, 38, 39, 51, 52, 60, 61) aufweisen, wobei die vier Schenckel an einem Ende durch einen gemeinsamen Steg (202, 203) miteinander verbunden sind und wobei die beiden äußeren Schenkel (17, 18, 19, 20, 34, 35, 47, 48, 58, 59) jeweils in eine Nut (36, 37, 49, 50) der gut wärmeleitenden Teile eingreifen und die beiden inneren Schenkel (21, 22, 23, 24, 38, 39, 51, 52, 60, 61) an jeweils einer Seitenfläche (7, 8) der gut wärmeleitenden Teile (1, 2, 32, 33, 45, 46, 74, 75, 88, 84, 301, 303) unmittelbar anliegen, dadurch gekennzeichnet, daß die beiden inneren Schenkel (21, 22, 23, 24, 38, 39, 51, 52, 60, 61) durch eine Brücke (25, 26, 40, 53, 62, 83) verbunden sind und daß die Seitenflächen (7, 8) der gut wärmeleitenden Teile so ausgebildet sind, daß nach Einbringen der Verbindungselemente (3, 4, 31, 44, 57, 73, 86, 87) die inneren Schenkel (21, 22, 23, 24, 38, 39, 51, 52, 60, 61) gegen die Federwirkung der Brücke (25, 26, 40, 53, 62, 83) an diese Seitenflächen gedrückt sind.

2. Verbindungsanordnung nach Anspruch 1, dadurch gekennzeichnet, daß die beiden inneren Schenkel auf jeweils einem Vorsprung der gut wärmeleitenden Teile aufliegen.

3. Verbindungsanordnung nach Anspruch 1, dadurch gekennzeichnet, daß die inneren Stege an ihren freien Enden Klauen (27, 28, 29, 30, 41, 42, 54, 55, 63, 64, 84, 85, 106, 107, 108, 109) aufweisen, die gegeneinander gerichtet sind.

4. Verbindungsanordnung nach den Ansprüchen 1 oder 2, dadurch gekennzeichnet, daß die Brücke (25, 26, 40, 53, 62, 83) zwischen den inneren Schenkeln vorgesehen ist.

5. Verbindungsanordnung nach den Ansprüchen 1 oder 2, dadurch gekennzeichnet, daß die inneren Schenkel (38, 39, 51, 52, 60, 61) an ihren Enden jeweils eine Schnapp-Nase (71, 72, 76, 77) aufweisen, mit der sie an einem Vorsprung (78, 79, 110, 111) einrasten.

6. Verbindungsanordnung nach den Ansprüchen 1 oder 2, dadurch gekennzeichnet, daß die beiden äußeren Schenkel (17, 18, 19, 20, 34, 35, 47, 48) mit der sie umgebenden Nut durch Formschluß verbunden sind.

7. Verbindungsanordnung nach den Ansprüchen 1 oder 2, dadurch gekennzeichnet, daß die Innenwände der die äußeren Schenkel (17, 18, 19, 20 ; 34, 35, 47, 48) umgebenden Nuten mit Zacken versehen sind.

8. Verbindungsanordnung nach den Ansprüchen 1 oder 2, dadurch gekennzeichnet, daß die Nut an einem Ende eine Ausweitung aufweist, in die eine Schnapp-Nase (67, 68) eines äußeren Schenkels (58, 59) eingreifen kann.

9. Verbindungsanordnung nach den Ansprüchen 1 oder 2, dadurch gekennzeichnet, daß die beiden inneren Schenkel auf einer abgeschrägten Fläche eines Vorsprungs aufliegen.

10. Verbindungsanordnung nach den Ansprüchen 1 oder 2, dadurch gekennzeichnet, daß die Brücke (25, 26, 40, 53, 83) gekrümmt ist.

11. Verbindungsanordnung nach den Ansprüchen 1 oder 2, dadurch gekennzeichnet, daß die Brücke (62) aus zwei geraden Teilstücken (65, 66) besteht, die einen Winkel zueinander bilden.

12. Verbindungsanordnung nach den Ansprüchen 1 oder 2, dadurch gekennzeichnet, daß zwischen die Klauen (41, 42 ; 54, 55) ein Koppelement (43, 56) eingeklemmt ist.

13. Verbindungsanordnung nach den Ansprüchen 1 oder 2, dadurch gekennzeichnet, daß in den Raum zwischen den Klauen (63, 64 ; 84, 85, 106, 107) und der Brücke (62, 83) das Ende (82, 92, 93) eines Koppelements (80, 90) eingefügt ist.

14. Verbindungsanordnung nach Anspruch 13, dadurch gekennzeichnet, daß das Koppelelement (90) einen ziehharmonikaartig gefalteten Teil (91) enthält, der die beiden Enden (92, 93) miteinander verbindet.

15. Verbindungsanordnung nach Anspruch 13, dadurch gekennzeichnet, daß das Ende (82) des Koppelelements (80) im Profilquerschnitt die Form eines gewölbten Schraubkopfes hat.

16. Verbindungsanordnung nach Anspruch 13, dadurch gekennzeichnet, daß das Ende (92, 93) des Koppelelements (90) zwei Schenkel (94, 95 ; 96, 97) aufweist, die ein U bilden, wobei die Außenseiten der das U bildenden Schenkel (94, 95 ; 96, 97) mit Vorsprüngen (98-105) versehen sind, zwischen denen die Klauen (106, 107) einrasten können.

17. Verbindungsanordnung nach Anspruch 1, dadurch gekennzeichnet, daß eine Fläche des Verbindungselements und/oder eine Fläche der gut wärmeleitenden Teile uneben sind.

18. Verbindungsanordnung nach Anspruch 17, dadurch gekennzeichnet, daß die Unebenheit der Fläche (306, 307) derart ist, daß eine Parallelverschiebung zwischen dem Verbindungselement und den gut wärmeleitenden Teilen verhindert wird.

19. Verbindungsanordnung nach Anspruch 17, dadurch gekennzeichnet, daß die Unebenheiten sägezahnartige Gebilde (350) sind, die senkrecht zur Profilebene der gut wärmeleitenden Teile und aufeinanderfolgend angeordnet sind.

20. Verbindungsanordnung nach Anspruch 17, dadurch gekennzeichnet, daß die Unebenheiten sägezahnartige Gebilde (350) sind, deren unterste und oberste Kante parallel zur Profilebene verlaufen.

21. Verbindungsanordnung nach Anspruch 1, dadurch gekennzeichnet, daß jedes Verbindungselement einstückig ausgebildet ist.

## Claims

1. Connector section, wherein parts which are good conductors of heat (1, 2, 32, 33, 45, 46, 74, 75, 88, 84, 301, 303) are connected to one another by two connecting members (3, 4, 31, 44, 57, 73, 86, 87, 302) in each case, made of material which is a poor conductor of heat, these connecting members each having two outer and two inner legs (17, 18, 19, 20, 34, 35, 47, 48, 58, 59, 21, 22, 23, 24, 38, 39, 51, 52, 60, 61), the four legs being connected to one another at one end by a common bar (202, 203), whilst the two outer legs (17, 18, 19, 20, 34, 35, 47, 48, 58, 59) engage in a groove (36, 37, 49, 50) in the parts which are good conductors of heat and the two inner legs (21, 22, 23, 24, 38, 39, 51, 52, 60, 61) each abut directly on a side face (7, 8) of the parts which are good conductors of heat (1, 2, 32, 33, 45, 46, 74, 75. 88, 84, 301, 303), characterized in that the two inner legs (21, 22, 23, 24, 38, 39, 51, 52, 60 61) are connected by a bridge (25, 26, 40, 53, 62, 83) and the side faces (7, 8) of the parts which are good conductors of heat are constructed so that, after the connecting members (3, 4, 31, 44, 57, 73. 86, 87) have been inserted, the inner legs (21, 22, 23, 24, 38, 39, 51. 52, 60 61) are pressed against these side faces counter to the spring action of the bridge (25, 26, 40, 53, 62, 83).

2. Connector section as claimed in claim 1, characterized in that the two inner legs each abut on a projection of the parts which are good conductors of heat.

3. Connector section as claimed in claim 1, characterized in that the inner bars comprise at their free ends claws (27, 28, 29, 30, 41, 42, 54, 55, 63, 64, 84, 85, 106, 107, 108, 109) which are directed towards each other.

4. Connector section as claimed in claim 1 or 2, characterized in that the bridge (25, 26, 40, 53, 62, 83) is provided between the inner legs.

5. Connector section as claimed in claim 1 or 2, characterized in that the inner legs (38, 39, 51, 52, 60, 61) comprise at their ends a snap-fit lug (71, 72, 76, 77) with which they engage on a projection (78, 79, 110, 111).

6. Connector section as claimed in claim 1 or 2, characterized in that the two outer legs (17, 18, 19, 20, 34, 35, 47, 48) are connected to the groove surrounding them by positively locking therewith.

7. Connector section as claimed in claim 1 or 2, characterized in that the inner walls of the grooves surrounding the outer legs (17, 18, 19, 20, 34, 35, 47, 48) are provided with prongs.

8. Connector section as claimed in claim 1 or 2, characterized in that the groove comprises at one end a wide end portion into which a snap-fit lug (67, 68) of an outer leg (58, 59) can engage.

9. Connector section as claimed in claim 1 or 2, characterized in that the two inner legs abut on a chamfered surface of a projection.

10. Connector section as claimed in claim 1 or 2, characterized in that the bridge (25, 26, 40, 53, 83) is curved.

11. Connector section as claimed in claim 1 or 2, characterized in that the bridge (62) consists of two straight sections (65, 66) at an angle to each other.

12. Connector section as claimed in claim 1 or 2, characterized in that a coupling element (43, 56) is clamped between the claws (41, 42, 54, 55).

13. Connector section as claimed in claim 1 or 2, characterized in that the end (82, 92, 93) of a coupling element (80, 90) is inserted in the space between the claws (63, 64, 84, 85, 106, 107) and the bridge (62, 83).

14. Connector section as claimed in claim 13, characterized in that the coupling element (90) contains a portion (91) folded in the manner of an accordion, connecting the two ends (92, 93) to each other.

15. Connector section as claimed in claim 13, characterized in that the end (82) of the coupling element (80) has the shape of a domed screwhead in profile cross section.

16. Connector section as claimed in claim 13, characterized in that the end (92, 93) of the coupling element (90) comprises two legs (94, 95, 96, 97) which form a U, whilst the outsides of the legs (94, 95, 96, 97) forming the U are provided with projections (98-105) between which the claws (106, 107) can engage.

17. Connector section as claimed in claim 1, characterized in that one surface of the connecting member and/or one surface of the parts which are good conductors of heat is or are uneven.

18. Connector section as claimed in claim 17, characterized in that the unevenness of the surface (306, 307) is such that parallel movement between the connecting member and the parts which are good conductors of heat is prevented.

19. Connector section as claimed in claim 17, characterized in that the unevennesses are in the form of structures resembling sawteeth (350) which are provided at right angles to the profile plane of the parts which are good conductors of heat and are arranged in succession.

20. Connector section as claimed in claim 17, characterized in that the unevennesses are in the form of structures resembling sawteeth (350) the bottom and top edges of which extend parallel to the profile plane.

21. Connector section as claimed in claim 1, characterized in that each connecting member is of integral construction.

## Revendications

1. Dispositif de liaison dans lequel des pièces bonnes conductrices de la chaleur (1, 2, 32, 33, 45, 46, 74, 75, 88, 84, 301, 303) sont reliées chacune par deux éléments de liaison (3, 4, 31, 44, 57, 73, 86, 87, 302) en matériau mauvais conducteur de la chaleur qui comportent chacun deux branches extérieures et deux branches intérieures (17, 18, 19, 20, 34, 35, 47, 48, 58, 59 ou 21, 22, 23, 24, 38, 39, 51, 52, 60 61) les quatre branches étant reliées les unes aux autres à une de leurs extrémités par une traverse commune (202, 203), les deux branches extérieures (17, 18, 19, 20, 34, 35, 47, 48, 58, 59) s'engageant chacune dans une rainure (36, 37, 49, 50) ménagée dans les pièces bonnes conductrices de la chaleur et les deux branches intérieures (21, 22, 23, 24, 38, 39, 51, 52, 60, 61) s'appliquant chacune directement contre une surface latérale (7, 8) des pièces bonnes conductrices de la chaleur (1, 2, 32, 33, 45, 46, 74, 75, 88, 84, 301 303) caractérisé en ce que les deux branches intérieures (21, 22, 23, 24, 38, 39, 51, 52, 60, 61) sont reliées par un pont (25, 26, 40, 53, 62, 83) et en ce que les surfaces latérales (7, 8) des pièces bonnes conductrices de la chaleur ont une forme telle qu'après mise en place des éléments de liaison (3, 4, 31, 44, 57, 73, 86, 87), les branches intérieures (21, 22, 23, 24, 38, 39, 51, 52, 60, 61) sont poussées, malgré l'action élastique du pont (25, 26, 40, 53, 62, 83) de manière à s'appliquer contre cette surface latérale.

2. Dispositif de liaison selon la revendication 1, caractérisé en ce que les deux branches intérieures s'appliquent chacune sur une partie saillante des pièces bonnes conductrices de la chaleur.

3. Dispositif de liaison selon la revendication 1, caractérisé en ce que les traverses intérieures comportent, à leurs extrémités libres, des griffes (27, 28, 29, 30, 41, 42, 54, 55, 63, 64, 84, 85, 106, 107, 108, 109) qui sont dirigées les unes vers les autres.

4. Dispositif de liaison selon l'une des revendications 1 ou 2, caractérisé en ce que le pont (25, 26, 40, 53, 62, 83) est intercalé entre les branches intérieures.

5. Dispositif de liaison selon l'une des revendications 1 ou 2, caractérisé en ce que les branches intérieures (38, 39, 51, 52, 60, 61) comportent à leurs extrémités un tenon de blocage (71, 72, 76, 77) par lequel elles se mettent en prise avec une partie saillante (78, 79, 110, 111).

6. Dispositif de liaison selon l'une des revendications 1 ou 2, caractérisé en ce que les deux branches extérieures (17, 18, 19, 20, 34, 35, 47, 48) sont reliées par encastrement à la rainure qui les entoure.

7. Dispositif de liaison selon l'une des revendications 1 ou 2, caractérisé en ce que les parois intérieures des rainures qui entourent les branches extérieures (17, 18, 19, 20, 34, 35, 47, 48) sont munies de dents.

8. Dispositif de liaison selon l'une des revendications 1 ou 2, caractérisé en ce que la rainure comporte, à l'une de ses extrémités, une partie élargie dans laquelle peut s'engager un tenon (67, 68) d'une branche extérieure (58, 59).

9. Dispositif de liaison selon l'une des revendications 1 ou 2, caractérisé en ce que les deux branches intérieures s'appliquent contre une surface biseautée d'une partie saillante.

10. Dispositif de liaison selon l'une des revendications 1 ou 2, caractérisé en ce que le pont (25, 26, 40, 53, 83) est courbé.

11. Dispositif de liaison selon l'une des revendications 1 ou 2, caractérisé en ce que le pont (62) est constitué par deux pièces rectilignes (65, 66) qui forment un angle entre elles.

12. Dispositif de liaison selon l'une des revendications 1 ou 2, caractérisé en ce qu'entre les griffes (41, 42, 54, 55) un élément d'accouplement (43, 56) est encastré.

13. Dispositif de liaison selon l'une des revendications 1 ou 2, caractérisé en ce que, dans l'espace compris entre les griffes (63, 64, 84, 85, 106, 107) et le pont (62, 83) l'extrémité (82, 92, 93) d'un élément d'accouplement (80, 90) se trouve engagée.

14. Dispositif de liaison selon la revendication 13, caractérisé en ce que l'élément d'accouplement (90) comporte une partie (91) pliée en accordéon qui relie l'une à l'autre les deux extrémités (92, 93).

15. Dispositif de liaison selon la revendication 13, caractérisé en ce que l'extrémité (82) de l'élément d'accouplement (80) présente une section de profil ayant la forme d'une tête de vis arrondie en forme de voûte.

16. Dispositif de liaison selon la revendication 13, caractérisé en ce que l'extrémité (92, 93) de l'élément d'accouplement (90) comporte deux branches (94, 95, 96, 97) qui forment un U, les côtés extérieurs des branches (94, 95, 96, 97) qui forment un U étant munis de saillies (98, 105) entre lesquelles les griffes (106, 107) peuvent s'engager.

17. Dispositif de liaison selon la revendication 1, caractérisé en ce qu'une surface de l'élément de liaison et/ou une surface de la pièce bonne conductrice de la chaleur ne sont pas planes.

18. Dispositif de liaison selon la revendication 17, caractérisé en ce que le manque de planéité de la surface (306, 307) est tel qu'un déplacement parallèle entre l'élément de liaison et les pièces bonnes conductrices de la chaleur ne peut pas se produire.

19. Dispositif de liaison selon la revendication 17, caractérisé en ce que les inégalités de surface ont la forme de dents de scie (350) qui sont disposées perpendiculairement au plan du profil des pièces bonnes conductrices de la chaleur et sont disposées à la suite les unes des autres.

20. Dispositif de liaison selon la revendication 17, caractérisé en ce que les inégalités de surface ont la forme de dents de scie (350) dont le bord inférieur et le bord supérieur sont parallèles au plan du profil.

21. Dispositif de liaison selon la revendication 1, caractérisé en ce que chaque élément de liaison est fait d'une seule pièce.

FIG.1

FIG.2

FIG.3

0 059 458

FIG.4

FIG.5

FIG.6

2

FIG.7

350

309a

351

350

351

FIG.7a

FIG.7b

352

352

FIG.7c

4